**Europäisches Patentamt**

**European Patent Office**

**Office européen des brevets**

(19)

(11) Numéro de publication: **0 237 407
B1**

(12)

# FASCICULE DE BREVET EUROPEEN

(45) Date de publication du fascicule du brevet:
**18.10.89**

(51) Int. Cl.⁴: **F16K 43/00**

(21) Numéro de dépôt: **87400436.9**

(22) Date de dépôt: **27.02.87**

(54) Robinet avec robinet d'arrêt incorporé.

(30) Priorité: **12.03.86 FR 8603492**

(43) Date de publication de la demande:
**16.09.87 Bulletin 87/38**

(45) Mention de la délivrance du brevet:
**18.10.89 Bulletin 89/42**

(84) Etats contractants désignés:
**DE ES GB IT**

(56) Documents cités:
**FR-A- 505 830**
**US-A- 1 379 388**
**US-A- 2 614 795**

(73) Titulaire: **Anciens Etablissements M. FRISQUET, SA,
Rue Branly Z.I. Beauval, F-77100 Meaux(FR)**

(72) Inventeur: **Frisquet, Maurice, 20 rue Branley,
F-77100 Meaux(FR)**

(74) Mandataire: **Lefebure, Gérard et al, Office
Blétry 2, boulevard de Strasbourg, F-75010 Paris(FR)**

**Description**

La présente invention concerne un robinet du type comprenant un corps creux ayant des orifices d'entrée et de sortie pour un fluide dont le débit est à commander, et un alésage cylindrique, qui est formé dans une paroi latérale du corps creux et qui débouche dans celui-ci entre les orifices d'entrée et de sortie, et une tête de robinet comportant une partie, qui est montée dans ledit alésage et qui est normalement fixe, et un clapet, qui est monté mobile dans ladite partie fixe et qui peut être déplacé vers et à l'écart d'un siège pour commander le débit du fluide, comme décrit dans US-A 1 379 388.

La présente invention est notamment, mais non exclusivement, applicable aux installations de distribution d'eau sanitaire. Lorsque le joint d'étanchéité du clapet mobile ou du siège y associé d'un robinet commandant l'alimentation en eau d'un appareil utilisateur est usé, il est nécessaire de le changer. Pour cela, il est nécessaire de couper l'eau dans le circuit d'alimentation de l'appareil en amont du robinet dont le joint doit être changé. C'est pourquoi, les installations de distribution d'eau comportent habituellement au moins un robinet d'arrêt général, qui commande l'alimentation en eau de toute l'installation, et éventuellement, lorsque l'installation a une structure arborescente, au moins un autre robinet d'arrêt au départ de chacune des branches principales de l'installation. Lorsqu'un unique robinet d'arrêt général est prévu, le changement du joint d'étanchéité d'un robinet oblige à couper l'eau dans toute l'installation, de sorte que tous les appareils utilisateurs raccordés à l'installation sont privés d'eau pendant le temps nécessaire au changement du joint d'étanchéité défectueux. Il en est de même lorsqu'un robinet d'arrêt est prévu dans chaque branche principale de l'installation, excepté que, dans ce cas, seuls les appareils utilisateurs raccordés à la branche dont le robinet d'arrêt est fermé, sont privés d'eau pendant le temps nécessaire au changement du joint d'étanchéité défectueux. En outre, lorsqu'un robinet d'arrêt est prévu dans chaque branche principale de l'installation, si celle-ci comporte un grand nombre de branches principales, il faut alors prévoir autant de robinets d'arrêt, ce qui augmente le coût de l'installation (pièces et main d'oeuvre). En outre, dans les deux cas, le robinet d'arrêt est rarement situé à proximité immédiate ou même dans la même pièce que le robinet dont on désire changer le joint d'étanchéité défectueux. Pour changer ce dernier, il est alors nécessaire d'effectuer des allées et venues entre le robinet dont le joint d'étanchéité est à changer et le robinet d'arrêt, ce qui entraîne une perte de temps.

Pour remédier aux inconvénients susmentionnés, il est bien sûr possible de monter un robinet d'arrêt en série avec chaque robinet dont le joint d'étanchéité doit pouvoir être changé en cas de besoin, à proximité immédiate de chaque robinet. Toutefois, cela augmenterait sensiblement le coût de l'installation.

La présente invention a donc pour but de fournir un robinet ayant son propre robinet d'arrêt incorporé, sans que cela augmente sensiblement le coût de l'installation de distribution de fluide.

A cet effet, le robinet de la présente invention est caractérisé en ce qu'il comprend en outre une douille cylindrique, qui est disposée dans l'alésage du corps creux entre celui-ci et la partie fixe de la tête de robinet et qui peut être déplacée axialement vers et à l'écart d'un autre siège de forme annulaire, qui est formé dans le corps creux en regard de l'extrémité interne de la douile sur une autre paroi latérale dudit corps creux, qui est opposée à la paroi latérale dans laquelle est formé ledit alésage.

Ainsi, lorsque la douille est dans une première position, à l'écart dudit autre siège annulaire, le fluide, par exemple de l'eau, peut circuler normalement à travers le robinet lorsque le clapet mobile est lui-même écarté du siège y associé. Par contre, lorsque la douille est dans une seconde position, en contact avec ledit autre siège annulaire, l'orifice d'entrée du robinet est obstrué et la tête de robinet peut être extraite du corps pour changer le joint d'étanchéité défectueux.

Ainsi, par l'adjonction d'une unique pièce supplémentaire, à savoir la douille susmentionnée, il est possible de regrouper dans un unique robinet deux fonctions, à savoir une fonction d'arrêt et une fonction de commande de débit, qui étaient auparavant réalisées au moyen de deux robinets séparés. Une telle solution est manifestement moins coûteuse que s'il fallait associer à chaque appareil utilisateur un robinet de commande de débit et un robinet d'arrêt distinct du robinet de commande de débit. Il devient donc ainsi possible d'associer à chaque appareil utilisateur un robinet avec son propre robinet d'arrêt incorporé sans augmenter exagérément le coût de l'installation de distribution d'eau, d'autant que l'on peut se dispenser de prévoir un robinet d'arrêt dans chacune des branches principales de l'installation, et qu'il suffit de prévoir éventuellement un unique robinet d'arrêt général. En outre, étant donné que le robinet de la présente invention incorpore son propre robinet d'arrêt, le changement d'un joint d'étanchéité défectueux s'en trouve facilité par rapport au cas où le robinet d'arrêt ne se trouvait pas à proximité du robinet dont le joint est à changer.

On décrira maintenant diverses formes d'exécution de la présente invention en faisant référence aux dessins annexés sur lesquels :

la figure 1 est une vue en coupe longitudinale d'un robinet suivant une première forme d'exécution de l'invention.

la figure 2 est une demi-vue en coupe suivant la ligne II-II de la figure 1.

la figure 3 est une vue en coupe longitudinale d'un robinet suivant une seconde forme d'exécution de l'invention.

la figure 4 est une demi-vue en coupe suivant la ligne IV-IV de la figure 3.

la figure 5 est une vue en coupe longitudinale d'un robinet suivant une troisième forme d'exécution de l'invention.

la figure 6 est une vue en coupe suivant la ligne VI-VI de la figure 5.

la figure 7 est une vue en coupe longitudinale d'un robinet suivant une quatrième forme d'exécution de l'invention.

la figure 8 est une vue en coupe suivant la ligne VIII-VIII de la figure 7.

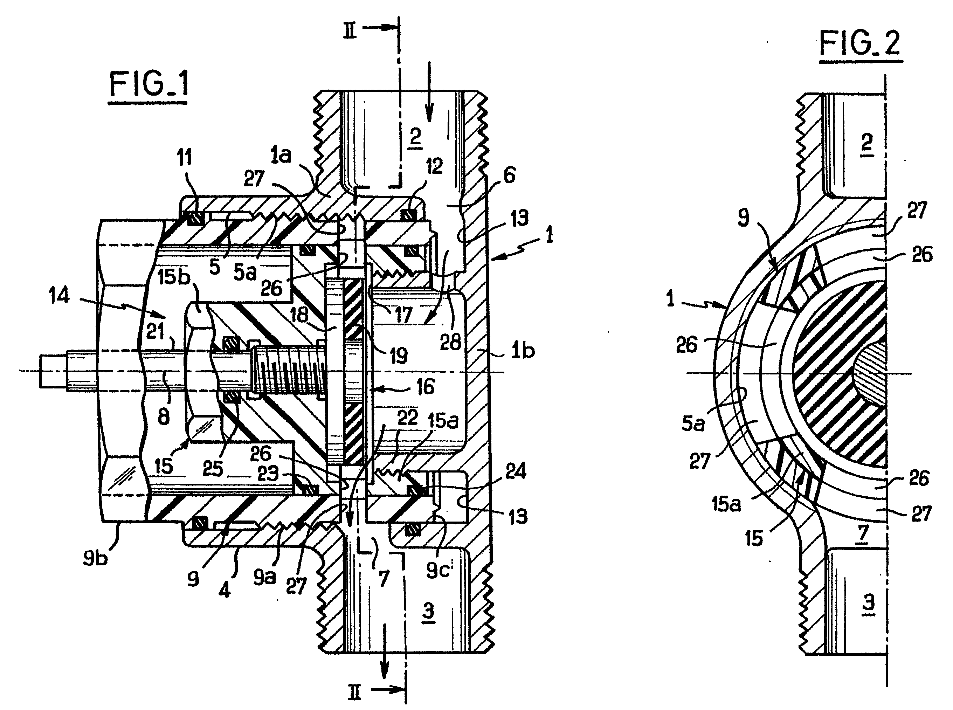

Le robinet montré dans les figures 1 et 2 comprend un corps creux 1 ayant un orifice d'entrée 2 et un orifice de sortie 3 pour le fluide, par exemple de l'eau, dont le débit est à commander. Sur sa paroi latérale 1a le corps 1 comporte un bossage la téral 4 percé d'un alésage 5 qui est fileté intérieurement sur une partie de sa longueur en 5a. L'alésage 5 communique avec l'orifice d'entrée 2 et l'orifice de sortie 3 respectivement par des passages 6 et 7, qui sont décalés l'un par rapport à l'autre dans la direction de l'axe longitudinal 8 de l'alésage 5, le passage 7 se trouvant près de la paroi latérale 1a du corps 1, tandis que le passage 6 se trouve près de la paroi latérale 1b du corps 1 qui est opposée à la paroi 1a.

Une douille cylindrique 9, par exemple en une matière plastique, filetée extérieurement en 9a sur une partie intermédiaire de sa longueur, est vissée dans l'alésage fileté 5. Pour faciliter le vissage et le dévissage de la douille 9, sa partie externe 9b qui fait saillie hors du corps 1, peut avoir par exemple une forme hexagonale comme montré dans la partie gauche de la figure 1. Deux joints toriques d'étanchéité 11 et 12 sont disposés entre la douille 9 et le corps 1 respectivement aux extrémités de l'alésage 5. Un siège 13, de forme annulaire, est formé dans le corps 1 en regard de l'extrémité interne 9c de la douille 9. Le siège 13 peut être par exemple constitué par une simple surface annulaire plane usinée sur la face interne de la paroi 1b.

A l'intérieur de la douile 9 est montée une tête de robinet 14 comprenant essentiellement une partie 15, qui est normalement fixe, et un clapet 16, qui est monté mobile dans la partie fixe 15 et qui peut être déplacé vers et à l'écart d'un siège 17. Comme montré dans la figure 1, le clapet 16 peut être constitué par un disque 18, dont l'une des faces porte un joint annulaire d'étanchéité 19 et qui est fixé rigidement à l'une des extrémités d'une tige de manoeuvre 21, partiellement filetée, qui est vissée dans la partie fixe 15 et dont l'autre extrémité porte un bouton de manoeuvre (non montré).

La partie fixe 15 de la tête de robinet 14 comporte une partie cylindrique creuse 15a, filetée intérieurement, qui est engagée à coulissement dans la douille 9 et vissée sur une saillie cylindrique creuse interne 22, filetée extérieurement, du corps 1. La saillie cylindrique creuse 22 s'étend coaxialement à l'alésage 5 sur une partie de la longueur de celui-ci à partir de la paroi 1b du corps 1 et son extrémité libre forme le siège 17. Pour permettre le vissage et le dévissage de la partie fixe 15 de la tête de robinet 14 sur la saillie cylindrique creuse 22 du corps 1, sa partie 15b a un diamètre extérieur plus petit que le diamètre intérieur de la douille 9 et a par exemple une forme hexagonale comme montré dans la partie gauche de la figure 1.

Deux joints d'étanchéité 23 et 24 sont disposés entre la douille 9 et la partie cylindrique creuse 15a respectivement aux extrémités de celles-ci, et un autre joint d'étanchéité 25 est disposé entre la partie 15b et la tige de manoeuvre 21. La partie cylindrique creuse 15a comporte plusieurs lumières de sortie 26, par exemple quatre lumières (seulement trois d'entre elles sont visibles dans la figure 2), qui sont espacées circonférentiellement dans sa périphérie et qui sont disposées entre les joints d'étanchéité 23 et 24. De même, la douille 9 comporte, entre les joints d'étanchéité 11 et 12, plusieurs lumières de sortie 27, par exemple quatre lumières, qui sont espacées circonférentiellement dans sa périphérie. Les dimensions des lumières de sortie 26 et 27, dans le sens circonférentiel, sont choisies de telle façon que lesdites lumières se chevauchent au moins partiellement quelle que soit la position angulaire relative de la douille 9 et de la partie cylindrique creuse 15a, lorsque la douille 9 occupe la position axiale montrée dans la figure 1. En outre, la saillie cylindrique creuse 22 du corps 1 comporte au moins une lumière d'entrée 28 qui communique avec l'orifice d'entrée 2 du corps 1 à travers le passage 6.

Avec le robinet décrit ci-dessus, lorsque la douille 9 occupe la position représentée dans la figure 1 et que le clapet 16 est écarté du siège 17, le fluide, par exemple de l'eau, est libre de circuler depuis l'orifice d'entrée 2 jusqu'à l'orifice de sortie 3 du corps 1 en suivant le trajet indiqué par les flèches, le débit de l'eau pouvant être réglé en écartant plus ou moins le clapet 16 du siège 17 au moyen de la tige de manoeuvre 21. On notera également que, lorsque le clapet 16 est complètement ouvert, le débit maximal du robinet peut être réglé au moyen de la douille 9 en la vissant ou en la dévissant dans l'alésage fileté 5 de telle façon que son extrémité 9c soit plus ou moins proche du siège annulaire 13 .Lorsque le joint 19 est usé et doit être remplacé, il suffit de visser complètement la douille 9 dans l'alésage fileté 5 de telle fa çon que son extrémité 9c vienne en contact avec le siège annulaire 13. A ce moment, le passage d'entrée 6 est obstrué et l'eau ne peut plus arriver jusqu'au clapet 16. Dans ces conditions, la partie cylindrique creuse 15a peut être dévissée de la saillie cylindrique creuse 22 en faisant tourner la partie 15b dans le sens du dévissage à l'aide d'une clé appropriée, et la tête du robinet 14 peut être ensuite extraite hors de la douille 9 en la faisant coulisser dans celle-ci, après quoi le joint d'étanchéité 19 peut être facilement remplacé par un joint neuf. Une fois que le joint d'étanchéité 19 a été changé, la tête de robinet 14 peut être remise en place en effectuant dans l'ordre inverse les opérations décrites ci-dessus, puis la douille 9 est partiellement dévissée et le robinet est alors prêt à servir à nouveau.

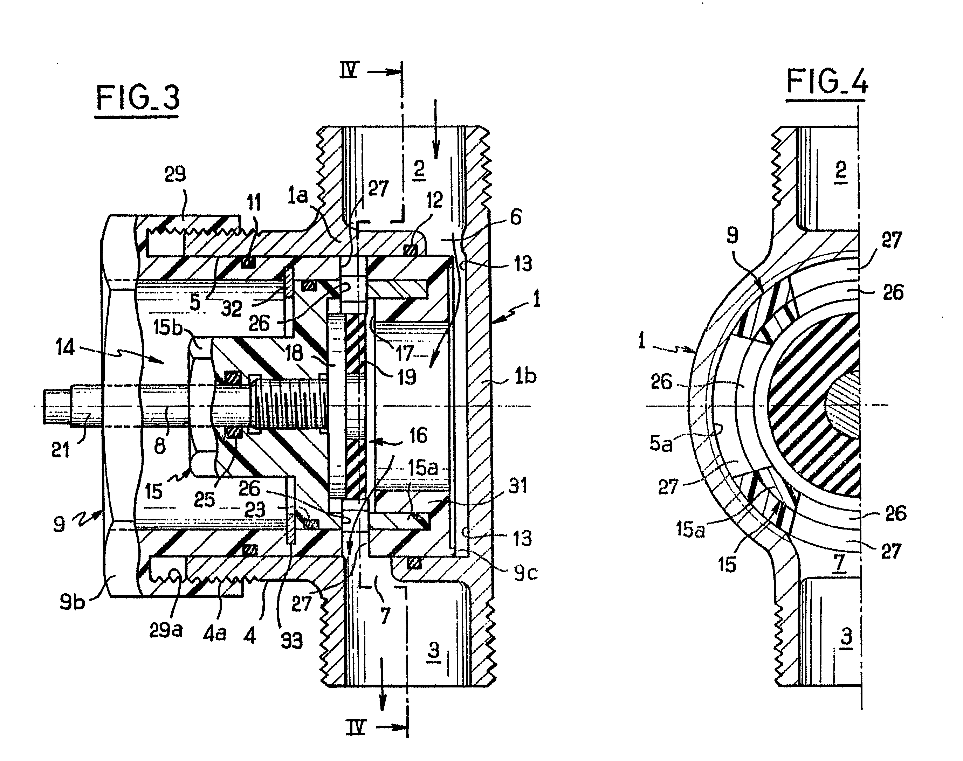

Dans le robinet des figures 3 et 4, les éléments qui sont identiques ou qui jouent le même rôle que ceux du robinet des figures 1 et 2 sont désignés par les mêmes numéros de référence et ne seront pas décrits à nouveau en détail. Le robinet des figures 3 et 4 diffère de celui des figures 1 et 2 en ce que la douille 9 est montée axialement coulissante dans l'alésage 5 dont la surface intérieure est entièrement lisse ainsi que la surface extérieure de la douille 9. Par contre, le bossage latéral 4 est fileté extérieurement en 4a et la douille 9 comporte, du côté de son extrémité externe, une collerette cylindrique extérieure 29, filetée intérieurement en 29a, qui est vissée sur le filetage extérieur 4a du bossage 4. Ainsi, en vissant la collerette 29 sur le filetage 4a du bossage 4, l'extrémité 9c de la douille 9 peut être amenée en contact et pressée contre le siège annulaire 13 pour obturer le passage d'entrée 6. Inversement, en dévissant la collerette 29, l'extrémité 9c de la douille 9 peut être écartée du siège annulaire 13 pour permettre le fonctionnement normal du robinet. Comme montré dans la partie gauche de la figure 3, la collerette 29 peut avoir par exemple une forme extérieure hexagonale pour permettre son vissage et son dévissage au moyen d'une clef appropriée.

En outre, dans le robinet des figures 3 et 4, la douille 9 comporte, à son extrémité interne, une collerette cylindrique intérieure 31, qui forme le siège 17 pour le clapet 16. La partie cylindrique creuse 15a de la tête de robinet 14 est engagée à un coulissement dans la douille et elle est retenue axialement dans les deux sens entre la collerette 31 et un élément annulaire d'arrêt 32, par exemple un anneau fendu du type "circlip", fixé de manière détachable, par encliquetage élastique, dans une gorge circulaire 33 de la douille 9. Dans cette forme d'exécution, étant donné que la collerette cylindrique intérieure 31 fait partie intégrante de la douille 9, le joint torique d'étanchéité 24 qui devait être prévu dans le robinet des figures 1 et 2 peut être supprimé. On notera que la fixation détachable de la partie fixe 15 de la tête de robinet 14 à l'intérieur de la douille 9 peut être réalisée de diverses autres manières. Par exemple, le circlip 32 peut être remplacé par une bague filetée extérieurement et vissée dans la douille 9 dont la surface intérieure est dans ce cas filetée sur une partie de sa longueur. Suivant une autre variante, la partie cylindrique creuse 15a peut être filetée intérieurement ou extérieurement et vissée soit sur la collerette 31 dont la surface extérieure est alors filetée, soit dans la douille 9, dont la surface intérieure est alors filetée sur une partie de sa longueur dans la région de son extrémité interne.

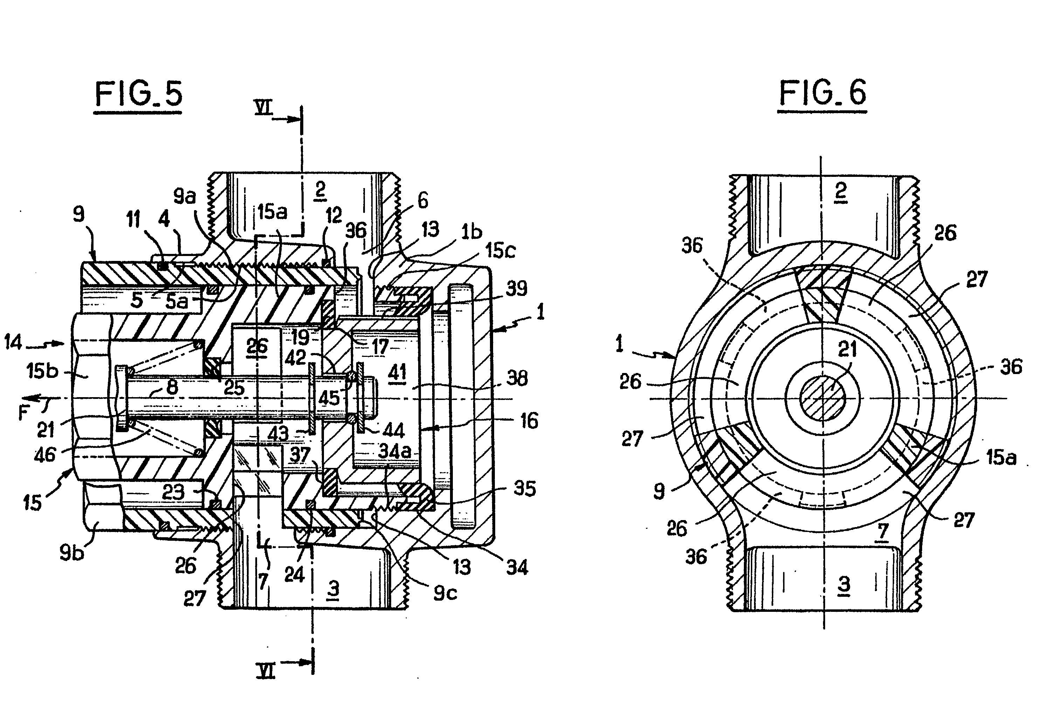

Dans le robinet des figures 5 et 6, les éléments qui sont identiques ou qui jouent le même rôle que dans les robinets décrits précédemment sont désignés par les mêmes numéros de référence et ne seront pas décrits à nouveau en détail. Le robinet des figures 5 et 6 diffère du robinet des figures 1 et 2 en ce que le corps 1 comporte dans sa paroi latérale 1b une cavité cylindrique borgne 34, filetée intérieurement en 34a, et en ce que la partie cylindrique creuse 15a de la partie fixe 15 de la tête de robinet 14 est filetée extérieurement en 15c à son extrémité interne. La partie cylindrique creuse 15a est engagée à coulissement dans la douille 9 et partiellement engagée et vissée dans la cavité filetée 34, un joint d'étanchéité 35 étant disposé entre le corps 1 et l'extrémité interne de la partie cylindrique creuse 15a. En outre, la partie cylindrique creuse 15a comporte plusieurs lumières d'entrée 36, par exemple, trois lumières espacées circonférentiellement dans sa périphérie près de son extrémité interne, au moins l'une des lumières 36 communiquant avec le passage d'entrée 6 lorsque l'extrémité interne 9c de la douille 9 est espacée du siège annulaire 13. Le joint torique d'étanchéité 24 est disposé entre les lumières d'entrée 36 et les lumières de sortie 26. Dans le robinet des figures 5 et 6, un épaulement annulaire 37 est en outre formé dans la surface intérieure de la partie cylindrique creuse 15a entre les lumières d'entrée 36 et les lumières de sortie 26. L'épaulement annulaire 37 est pourvu d'un joint annulaire d'étanchéité 19 qui forme le siège 17 pour le clapet mobile 16.

Le robinet des figures 5 et 6 peut être conçu comme un robinet à fermeture automatique temporisée. Dans ce cas, le clapet mobile 16 est constitué par un piston creux 38 qui est monté coulissant dans le joint annulaire d'étanchéité 35 et qui est pourvu d'une rainure longitudinale calibrée 39 dans sa surface cylindrique extérieure, la rainure 39 formant un passage de fuite contrôlée, à travers lequel l'eau en provenance de l'orifice d'entrée 2 peut s'écouler lentement vers la chambre 41 formée à l'intérieur du piston creux 38. le fond du piston 38 comporte un trou 42 dans lequel l'extrémité interne de la tige de manoeuvre 21 est librement engagée, ladite tige ayant un diamètre extérieur légèrement plus petit que le diamètre intérieur du trou 42. Deux circlips 43 et 44, axialement espacés sur la tige 21, limitent le mouvent axial de ladite tige par rapport au piston 38. Le circlip 44 forme en combinaison avec un joint torique d'étanchéité 45 et avec le trou 42 une soupape. A l'autre extrémité de la tige 21 est fixé un bouton poussoir (non montré). Un ressort de compression 46 sollicite la tige 21 dans la direction de la flèche F afin de maintenir en position fermée la soupape formée par le circlip 44, le joint torique d'étanchéité 45 et le trou 42, lorsqu'aucune pression n'est exercée sur le bouton poussoir. Le ressort 46 aide également à la fermeture du clapet mobile 16 lorsque le bouton poussoir est relâché.

Le fonctionnement d'un tel robinet à fermeture automatique temporisée est bien connu (voir par exemple le brevet Français N° 2 367 971), de sorte qu'il n'est pas jugé utile de décrire ici son fonctionnement dans la mesure où il ne concerne pas directement la présente invention. On notera simplement que, lorsque la douille 9 est dans une position écartée du siège annulaire 13, le robinet peut fonctionner normalement, c'est-à-dire que le fluide, généralement de l'eau, peut être délivré par le robinet pendant un temps prédéterminé, par une simple pression de courte durée sur le bouton poussoir lié à la tige 21. Lorsqu'on désire changer le joint d'étanchéité 19, on commence par visser la douille 9 dans l'alésage fileté 5 afin d'appliquer l'extrémité 9c de la douille contre le siège annulaire 13. Ensuite, la partie fixe 15 de la tête de robinet 14 peut être dévissée par rapport à la cavité filetée 34 et la tête de robinet 14 peut être alors extraite par coulissement hors de la douille 9. Après avoir enlevé le circlip 44 et le joint 45, le piston 38 peut être séparé de la tige 21 et le joint d'étanchéité défectueux 19 peut être remplacé par un joint neuf. Ensuite, les éléments du robinet peuvent être remis en place en effectuant dans l'ordre inverse les opérations décrites ci-dessus et, après avoir dévissé partiellement la douille 9, le robinet est à nouveau prêt à servir.

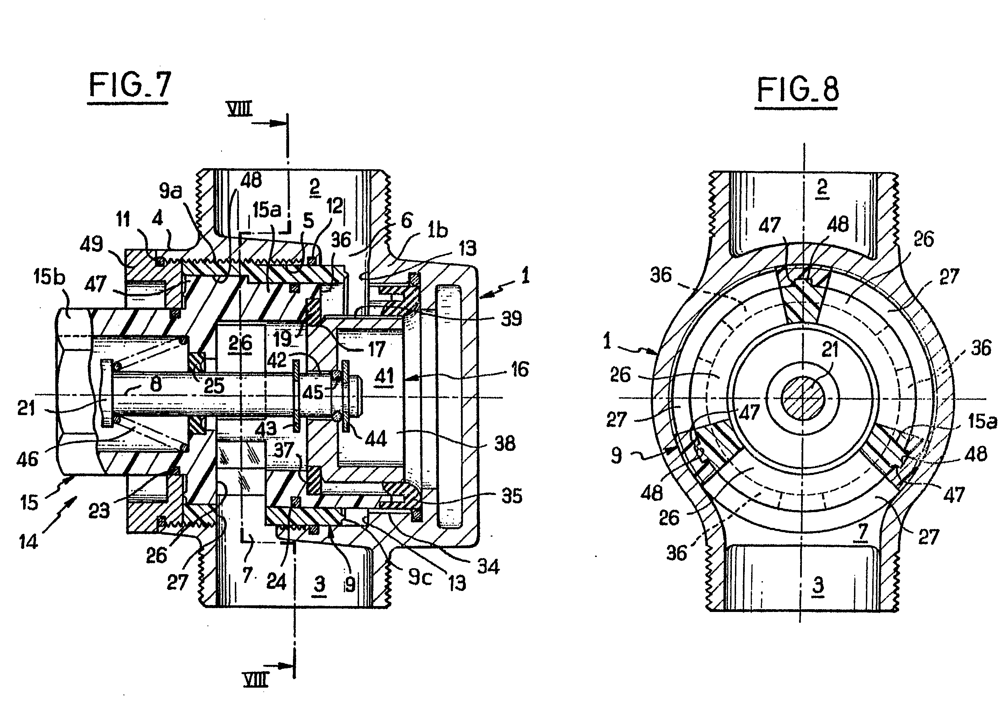

Dans les trois robinets précédemment décrits, la douille 9 est déplacée axialement vers et à l'écart du siège annulaire 13 en agissant sur la douille elle-même. On décrira maintenant comment la douille 9 peut être déplacée vers et à l'écart du siège annulaire 13 y associé en agissant non plus sur la douille elle-même mais sur la partie fixe 15 de la tête de robinet 14 . Dans le robinet des figures 7 et 8, qui a une structure semblable à celle du robinet des figures 5 et 6, les éléments qui sont identiques ou qui jouent le même rôle que ceux du robinet des figures 5 et 6 sont désignés par les mêmes numéros de référence. Le robinet des figures 7 et 8 diffère du robinet des figures 5 et 6 en ce que la cavité cylindrique borgne 34 du corps 1 n'est plus filetée intérieurement, l'extrémité interne de la partie cylindrique creuse 15a de la partie fixe 15 de la tête de robinet 14 étant simplement engagée à coulissement et montée tournante dans la cavité 34 . En outre, la douille 9 et la partie cylindrique creuse 15a sont accouplées mécaniquement de manière à tourner ensemble, de telle sorte qu'une rotation de la partie fixe 15 de la tête de robinet 14 provoque un mouvement axial de la douille 9 par vissage ou dévissage de celle-ci dans l'alésage fileté 5 du corps 1 . L'accouplement entre la douille 9 et la partie cylindrique 15a peut être par exemple constitué par des nervures 47 , qui s'étendent longitudinalement à la périphérie de la partie cylindrique creuse 15a et qui sont engagées dans des rainures 48 , qui s'étendent longitudinalement dans la surface cylindrique intérieure de la douille 9 sur une partie de la longueur de celle-ci. Un bouchon annulaire 49 , fileté extérieurement,est vissé dans l'extrémité externe de l'alésage fileté 5 du corps 1 . Dans ce cas, le joint d'étanchéité 11 est disposé entre le bouchon annulaire 49 et le corps 1 à l'extrémité externe de l'alésage 5 , tandis que le joint d'étanchéité 23 est disposé entre le bouchon annulaire 49 et la partie fixe 15 de la tête de robinet 14 .

Il va de soi que les diverses formes d'exécution de la présente invention, qui ont été décrites ci-dessus ont été données à titre d'exemple purement indicatif et nullement limitatif, et que de nombreuses modifications peuvent être facilement apportées par l'homme de l'art sans pour autant sortir du cadre de la présente invention. C'est ainsi notamment que, dans le robinet des figures 1 et 2 et dans le robinet des figures 5 et 6, au lieu que l'alésage 5 et la douille 9 soient filetés respectivement intérieurement et extérieurement, ils peuvent être lisses comme dans le robinet de la figure 3 et, dans ce cas, le bossage latéral 4 peut être fileté et la douille 9 peut être pourvue d'une collerette cylindrique extérieure, filetée intérieurement, comme la collerette 29 du robinet de la figure 3. Suivant une autre variante d'exécution, dans le robinet des figures 1 et 2, la saillie cylindrique creuse 22 du corps 1 peut être supprimée et , dans ce cas, le siège 17 peut être constitué par une collerette cylindrique intérieure formant partie intégrante de la douille 9 comme la collerette 31 de la figure 3. En outre, au lieu que le robinet des figures 5 et 6 ou le robinet des figures 7 et 8 soient conçus comme un robinet à fermeture automatique temporisée, ils peuvent être conçus comme des robinets ordinaires. Dans ce cas, le joint d'étanchéité 35 est supprimé, le piston creux 38 est remplacé par un clapet qui est fixé rigidement à la tige de manoeuvre 21 et cette dernière au lieu d'être montée axialement coulissante dans la partie fixe 15 de la tête de robinet, est vissée dans cette dernière suivant une disposition semblable à celle montrée dans les figures 1 et 3.

## Revendications

1.- Robinet comprenant un corps creux (1) ayant des orifices alignés d'entrée (2) et de sortie (3) pour un fluide dont le débit est à commander, et un alésage cylindrique (5), qui est formé dans une paroi latérale (1a) du corps creux et qui débouche dans celui-ci entre les orifices d'entrée et de sortie, et une tête de robinet (14) comportant une partie (15), qui est montée dans ledit alésage et qui est normalement fixe, un clapet (16), qui est monté mobile dans ladite partie fixe et qui peut être déplacé vers et à l'écart d'un siège (17) pour commander le débit du fluide, et une douille cylindrique (9), qui est disposée dans l'alésage (5) du corps creux (1) entre celui-ci et la partie fixe (15) de la tête de robinet (14) et qui peut être déplacée axialement vers et à l'écart d'un autre siège (13), de forme annulaire, caractérisé en ce que ledit autre siège (13) est formé dans le corps creux en regard de l'extrémité interne (9c) de la douille (9) sur une autre paroi latérale (1b) du corps, qui est opposée à la paroi latérale (1a) dans laquelle est formé ledit alésage (5).

2.- Robinet selon la revendication 1, caractérisé en ce que la douille (9) est filetée extérieurement sur une partie (9a) de sa longueur et est vissée dans l'alésage (5) du corps creux (1), qui est fileté intérieurement sur une partie (5a) de sa longueur.

3.- Robinet selon la revendication 1, caractérisé en ce que l'alésage (5) est lisse et formé dans un bossage latéral (4) du corps creux (1), qui est fileté extérieurement, et en ce que la douille (9) est montée axialement coulissante dans l'alésage (5) du corps creux et comporte, du côté de son extrémité externe (9b), une collerette cylindrique extérieure (29), filetée intérieurement qui est vissée sur le filetage extérieur (4a) dudit bossage.

4.- Robinet selon l'une quelconque des revendications 1 à 3, caractérisé en ce que la partie fixe (15) de la tête de robinet (14) comporte une partie cylindrique creuse (15a), filetée intérieurement, qui est engagée à coulissement dans la douille (9) et vissée sur une saillie cylindrique creuse interne (22) du corps (1), qui est filetée extérieurement, s'étend coaxialement au dit alésage (5) sur une partie de sa longueur à partir de ladite autre paroi latérale (1b) du corps et forme ledit siège (17) pour le clapet mobile (16), ladite saillie cylindrique creuse (22) comportant dans sa périphérie au moins une lumière d'entrée (28), qui communique avec ledit orifice d'entrée (2) du corps (1).

5.- Robinet selon l'une quelconque des revendications 1 à 3, caractérisé en ce que la douille (9) comporte, à son extrémité interne (9c), une collerette cylindrique intérieure (31), qui forme ledit siège (17) pour le clapet mobile (16), et en ce que la partie fixe (15) de la tête de robinet (14) comporte une partie cylindrique creuse (15a) qui est fixée de manière détachable concentriquement dans la douille (9).

6. - Robinet selon la revendication 5, caractérisé en ce que ladite partie cylindrique creuse (15a) est engagée à coulissement dans la douille (9) et retenue axialement entre la collerette intérieure (31) de la douille et un élément annulaire d'arrêt (32) fixé de manière détachable dans la douille (9).

7. - Robinet selon l'une quelconque des revendications 4 à 6, caractérisé en ce que des premier et second joints d'étanchéité (11 et 12) sont disposés entre la douille (9) et le corps creux (1) respectivement aux extrémités interne et externe de l'alésage (5), en ce qu'au moins un troisième joint d'étanchéité (23) est disposé entre la douille (9) et la partie cylindrique creuse (15a) à son extrémité externe, en ce que ladite partie cylindrique creuse (15a) comporte plusieurs lumières de sortie (26) espacées circonférentiellement dans sa périphérie entre son extrémité interne et le troisième joint d'étanchéité (23), et en ce que la douille (9) comporte aussi dans sa périphérie, entre les premier et second joints d'étanchéité (11 et 12), plusieurs lumières de sortie (27) espacées circonférentiellement, qui chevauchent au moins partiellement les lumières de sortie (26) de ladite partie cylindrique creuse (15a) et dont l'une au moins communique avec l'orifice (3) du corps creux (1).

8.- Robinet selon l'une quelconque des revendications 1 à 3, caractérisé en ce que la partie fixe (15) de la tête de robinet (14) comporte une partie cylindrique creuse (15a), filetée extérieurement à son extrémité interne, qui est engagée à coulissement dans la douille (9) et partiellement engagée et vissée dans une cavité cylindrique borgne (34), filetée intérieurement, qui est formée dans ladite autre paroi latérale (1b) du corps creux (1),en ce que des premier et second joints d'étanchéité(11 et 12) sont disposés entre la douille (9) et le corps creux (1) respectivement aux extrémités externe et interne de l'alésage (5), et en ce que des troisième et quatrième joints d'étanchéité (23 et 24) sont disposés entre la douille (9) et la partie cylindrique creuse (15a) respectivement à l'extrémité externe et dans une partie intermédiaire de ladite partie cylindrique creuse.

9.- Robinet selon la revendication 2, caractérisé en ce que la partie fixe (15) de la tête de robinet (14) comporte une partie cylindrique creuse (15a), qui est engagée à coulissement dans la douille (9) et partiellement engagée à coulissement et montée tournante dans une cavité cylindrique borgne (34) formée dans ladite autre paroi latérale (1b) du corps creux (1), et en ce que la douille (9) et ladite partie cylindrique creuse (15a)sont accouplées mécaniquement pour tourner ensemble, de telle sorte qu'une rotation de la partie fixe (15) de la tête de robinet (14) provoque un mouvement axial de la douille (9) par vissage ou dévissage de celle-ci dans l'alésage fileté (5) du corps creux (1).

10.- Robinet selon la revendication 9, caractérisé en ce que l'accouplement entre la douille (9) et ladite partie cylindrique creuse (15a) est constitué par des nervures (47) qui s'étendent longitudinalement à la périphérie de la partie cylindrique creuse (15a) et qui sont engagées dans des rainures(48)qui s'étendent longitudinalement dans la surface cylindrique intérieure de la douille (9) sur une partie de la longueur de celle-ci.

11.- Robinet selon la revendication 9 ou 10, caractérisé en ce qu'un bouchon annulaire (49), fileté extérieurement, est vissé dans l'extrémité externe de l'alésage fileté (5) du corps creux (1), en ce qu'un premier joint d'étanchéité (11) est disposé entre le bouchon annulaire fileté (49) et le corps creux (1) à l'extrémité externe de l'alésage (5), un deuxième joint d'étanchéité (12) est disposé entre la douille (9) et le corps creux (1) à l'extrémité interne de l'alésage (5), un troisième joint d'étanchéité (23)est disposé entre le bouchon annulaire fileté (49) et la partie fixe (15) de la tête de robinet (14), et un quatrième joint d'étanchéité (24) est disposé entre la douille (9) et la partie cylindrique creuse (15a) dans une partie intermédiaire de celle-ci.

12. - Robinet selon la revendication 8 ou 11, caractérisé en ce que ladite partie cylindrique creuse (15a) comporte plusieurs lumières d'entrées (36) espacées circonférentiellement dans sa périphérie, près de son extrémité interne, au moins l'une des lumières d'entrée (36) communiquant avec l'orifice d'entrée (2) du corps creux (1), plusieurs lumières de sortie (26) qui sont espacées circonférentiellement dans sa périphérie entre les troisième et quatrième joints d'étanchéité (23 et 24) et qui sont espacées axialment des lumières d'entrée (36), le quatrième joint d'étanchéité (24) étant situé entre les lumières d'entrée (36) et les lumières de sortie (26), et un épaulement annulaire (37), qui est formé dans la surface intérieure de la partie cylindrique creuse (15a) entre les lumièresd'entrée (36) et les lumièresde sortie (26) et qui est pourvu d'un joint annulaire d'étanchéité (19)formant ledit siège (17) pour le clapet mobile (16), et en ce que la douille (9) comporte aussi dans sa périphérie, entre les premier et second joints d'étanchéité (11 et 12), plusieurs lumières de sortie (27) espacées circonférentiellement, qui chevauchent au moins partiellement les lumières de sortie (26) de ladite partie cylindrique creuse (15a) et dont l'une au moins communique avec l'orifice de sortie (3) du corps creux (1).

## Patentansprüche

1. Ventil mit einem Hohlkörper (1), der für das Fluid, dessen Strömungsmenge zu verstellen ist, einen Einlaß (2) und einen damit fluchtenden Auslaß (3) aufweist, mit einer in einer Seitenwand (1a) des Hohlkörpers gebildeten zylindrischen Bohrung (5), die darin zwischen den Ein- und Auslaß mündet, und mit einem Ventilkopf (14), der einen in der genannten Bohrung enthaltenen und normalerweise feststehenden Teil (15), ein in dem genannten feststehenden Teil beweglich angeordnetes Verschlußorgan (16), das zur Verstellung der Strömungsmenge des Fluids in bezug auf einen Sitz (17) vor- und zurückbewegbar ist, und eine zylindrische Buchse (9) umfaßt, die innerhalb der Bohrung (5) des Hohlkörpers (1) zwischen diesem und dem feststehenden Teil (15) des Ventilkopfes (14) angeordnet und in bezug auf einen weiteren ringförmigen Sitz (13) vor und zurück axial bewegbar ist, dadurch gekennzeichnet, daß der genannte weitere Sitz (13) in dem Hohlkörper in bezug auf das Innenende (9c) der Buchse (9) an einen weiteren Seitenwand (1b) des Körpers gebildet ist, die der die Bohrung (5) enthaltenden Seitenwand (1a) gegenüberliegt.

2. Ventil nach Anspruch 1, dadurch gekennzeichnet, daß die Buchse (9) über einen Teil (9a) ihrer Länge mit einem äußeren Gewinde versehen und in der Bohrung (5) des Hohlkörpers (1), die mit einem über einen Teil (5a) ihrer Länge sich erstreckenden Gewinde versehen ist, eingeschraubt ist.

3. Ventil nach Anspruch 1, dadurch gekennzeichnet, daß die Bohrung (5) glatt und in einem seitlichen, ein äußeres Gewinde aufweisenden Vorsprung (4) des Hohlkörpers (1) gebildet ist und daß die Buchse (9) in der Bohrung (5) des Hohlkörpers axial verschiebbar ist und seitlich ihres Außenendes (9b) einen äußeren, mit einem inneren Gewinde versehenen zylindrischen Kragen (29) umfaßt, der auf das Außengewinde (4a) des genannten Vorsprungs geschraubt ist.

4. Ventil nach einem der Ansprüche 1 bis 3, dadurch gekennzeichnet, daß das feststehende Teil (15) des Ventilkopfes (14) ein zylindrisches, mit einem Innengewinde versehenes, hohles Teil (15a) umfaßt, das verschiebbar in der Buchse (9) enthalten und auf einen inneren, zylindrischen, mit einem Außengewinde versehenen hohlen Vorsprung (22) des Körpers (1) geschraubt ist, der ausgehend von der genannten weiteren Seitenwand (1b) des Körpers coaxial zur genannten Bohrung (5) über einen Teil ihrer Länge verläuft und den genannten Sitz (17) für das bewegbare Verschlußorgan (16) bildet, wobei der genannte zylindrische, hohle Vorsprung (22) längs seines Umfangs mindestens eine Einlaßöffnung (28) umfaßt, die mit dem genannten Einlaß (2) des Körpers (1) verbunden ist.

5. Ventil nach einem der Ansprüche 1 bis 3, dadurch gekennzeichnet, daß die Buchse (9) einen an ihrem inneren Ende (9c) angeordneten, zylindrischen Innenkragen (31) umfaßt, der den genannten Sitz (17) für das bewegbare Verschlußorgan (16) bildet, und daß das feststehende Teil (15) des Ventilkopfs (14) ein zylindrisches, hohles Teil (15a) umfaßt, das konzentrisch lösbar in der Buchse (9) eingebaut ist.

6. Ventil nach Anspruch 5, dadurch gekennzeichnet, daß das genannte zylindrische hohle Teil (15a) in der Buchse (9) verschiebbar gehalten und zwischen dem Innenkragen (31) der Buchse und einem ringförmigen, lösbar in der Buchse (9) eingebauten Anschlagelement (32) axial festgehalten ist.

7. Ventil nach einem der Ansprüche 4 bis 6, dadurch gekennzeichnet, daß eine erste und eine zweite Dichtung (11 und 12) zwischen der Buchse (9) und dem Hohlkörper (1) jeweils an dem inneren und an dem äußeren Ende der Bohrung (5) angeordnet sind, daß mindestens eine dritte Dichtung (23) zwischen der Buchse (9) und dem zylindrischen, hohlen Teil (15a) an seinem äußeren Ende angeordnet ist, daß das genannte zylindrische hohle Teil (15a) eine Anzahl von in Umfangsrichtung Abstand voneinander aufweisenden Auslaßöffnungen (26) an seinem Umfang zwischen seinem inneren Ende und der dritten Dichtung (23) umfaßt, und daß auch die Buchse (9) eine Anzahl von in Umfangsrichtung Abstand voneinander aufweisenden Auslaßöffnungen (27) an ihrem Umfang zwischen der ersten und der zweiten Dichtung (11 und 12) umfaßt, die die Auslaßöffnungen (26) des genannten zylindrischen hohlen Teils (15a) mindestens teilweise überlappen, und von denen mindestens eine mit dem Auslaß (3) des Hohlkörpers (1) verbunden ist.

8. Ventil nach einem der Ansprüche 1 bis 3, dadurch gekennzeichnet, daß das feststehende Teil (15) des Ventilkopfes (14) ein mit einem an seinem inneren Ende angeordneten Außengewinde versehenes, zylindrisches, hohles Teil (15a) umfaßt, das in der Buchse (9) verschiebbar ist und teilweise in einen mit einem inneren Gewinde versehenen zylindrischen, blinden Hohlraum (34) eingreift und eingeschraubt ist, der in der genannten weiteren Seitenwand (1b) des Hohlkörpers (1) gebildet ist; daß eine erste und eine zweite Dichtung (11 und 12) zwischen der Buchse (9) und dem Hohlkörper (1) jeweils an dem äußeren und inneren Ende der Bohrung (5) angeordnet sind; und daß eine dritte und eine vierte Dichtung (23 und 24) zwischen der Buchse (9) und dem zylindrischen hohlen Teil (15a) jeweils an dem äußeren Ende und in einem mittleren Bereich des genannten zylindrischen, hohlen Teils angeordnet sind.

9. Ventil nach Anspruch 2, dadurch gekennzeichnet, daß das feststehende Teil (15) des Ventilkopfes (14) ein zylindrisches, hohles Teil (15a) umfaßt, das in der Buchse (9) verschiebbar ist und in einen blinden, in der genannten weiteren Seitenwand (1b) des Hohlkörpers (1) gebildeten Hohlraum (34) verschiebbar eingreift und drehbar montiert ist, und daß die Buchse (9) und das genannte zylindrische, hohle Teil (15a) dergestalt mechanisch zu gemeinsamer Drehung miteinander gekuppelt sind, daß eine Drehung des feststehenden Teils (15) des Ventilkopfes (14) eine axiale Bewegung der Buchse (9) durch Ein- bzw. Ausschrauben derselben in der mit einem Gewinde versehenen Bohrung (5) des Hohlkörpers (1) hervorruft.

10. Ventil nach Anspruch 9, dadurch gekennzeichnet, daß die Kupplung zwischen der Buchse (9) und dem genannten zylindrischen, hohlen Teil (15a) aus sich in Längsrichtung am Umfang des zylindrischen, hohlen Teils (15a) sich erstreckenden Rippen (47) besteht, die in Längsrichtung an der inneren zylindrischen Oberfläche der Buchse (9) über einem Teil von deren Länge sich erstreckende Rillen (48) eingreifen.

11. Ventil nach Anspruch 9 oder 10, dadurch gekennzeichnet, daß ein mit einem äußeren Gewinde versehener ringförmiger Stopfen (49) in dem äußeren Ende der mit einem Gewinde versehenen Bohrung (5) des Hohlkörpers (1) eingeschraubt ist; daß eine erste Dichtung (11) zwischen dem ringförmigen, mit einem Gewinde versehenen Stopfen (49) und dem Hohlkörper (1) an dem äußeren Ende der Bohrung (5), eine zweite Dichtung (12) zwischen der Buchse (9) und dem Hohlkörper (1) an dem inneren Ende der Bohrung (5), eine dritte Dichtung (23) zwischen dem ringförmigen, mit einem Gewinde versehenen Stopfen (49) und dem feststehenden Teil (15) des Ventilkopfes (14), und eine vierte Dichtung (24) zwischen der Buchse (9) und dem zylindrischen, hohlen Teil (15a) in einem mittleren Bereich desselben angeordnet sind.

12. Ventil nach Anspruch 8 oder 11, dadurch gekennzeichnet, daß das genannte zylindrische Teil (15a) mehrere in Umfangsrichtung Abstand voneinander aufweisende Einlaßöffnungen (36) an seinem Umfang nahe seinem inneren Ende umfaßt, wobei mindestens eine der Einlaßöffnungen (36) mit dem Einlaß (2) des Hohlkörpers (1) verbunden ist, das es mehrere in Umfangsrichtung Abstand voneinander aufweisende Auslaßöffnungen (26) an seinem Umfang umfaßt, die zwischen der dritten und der vierten Dichtung (23 und 24) angeordnet sind und einen axialen Abstand von den Einlaßöffnungen (36) aufweisen, wobei die vierte Dichtung (24) zwischen den Einlaß- (36) und den Auslaßöffnungen (26) angeordnet ist, und daß es eine ringförmige Schulter (37) aufweist, die in der inneren Oberfläche des zylindrischen, hohlen Teils (15a), zwischen den Einlaß- (36) und den Auslaßöffnungen (26) gebildet und mit einer ringförmigen, den genannten Sitz (17) für das bewegbare Verschlußorgan (16) bildenden Dichtung (19) versehen ist; und daß die Buchse (9) ferner um ihren Umfang, zwischen der ersten und der zweiten Dichtung (11 und 12) mehrere in Umfangsrichtung in Abstand voneinander angeordnete Auslaßöffnungen (27) umfaßt, die die Auslaßöffnungen (26) des genannten zylindrischen, hohlen Teils (15a) mindestens teilweise überlappen und von denen mindestens eine mit dem Auslaß (3) des Hohlkörpers (1) verbunden ist.

**Claims**

1. A valve comprising a hollow body (1) having aligned inlet and outlet openings (2 and 3 respectively) for a fluid, the flow of which is to be controlled, and a cylindrical bore (5) which is formed in a lateral wall (1a) of the hollow body and which opens into the latter between the inlet and outlet openings, and a valve head (14) comprising a part (15) which is mounted in said bore and which is normally fixed, a flap (16) which is mounted movably in said fixed part and which can be displaced towards and away from a seat (17) so as to control the flow of fluid, and a cylindrical sleeve (9) which is arranged in the bore (5) of the hollow body (1) between the latter and the fixed part (15) of the valve head (14), and which can be displaced axially towards and away from another seat (13), of annular shape, characterised in that said other seat (13) is formed in the hollow body facing the inner end (9c) of the sleeve (9) on another lateral wall (1b) of the body, which is opposite the lateral wall (1a) in which said bore (5) is formed.

2. A valve according to Claim 1, characterised in that the sleeve (9) is externally threaded over a part (9a) of its length and is screwed into the bore (5) of the hollow body (1), which is internally threaded over a part (5a) of its length.

3. A valve according to Claim 1, characterised in that the bore (5) is smooth and formed in a lateral projection (4) of the hollow body (1), which is externally threaded, and in that the sleeve (9) is mounted to slide axially in the bore (5) of the hollow body and comprises, on the side of its outer end (9b), an internally threaded outer cylindrical collar (29) which is screwed on to the external thread (4a) of said projection.

4. A valve according to any one of Claims 1 to 3, characterised in that the fixed part (15) of the valve head (14) comprises an internally threaded hollow cylindrical part (15a) which is engaged to slide in the sleeve (9) and is screwed on to a hollow inner cylindrical projection (22) of the body (1), which is externally threaded, extends coaxially to said bore (5) over part of its length starting from said other lateral wall (1b) of the body and forms said seat (17) for the movable flap (16), said hollow cylindrical projection (22) comprising in its periphery at least one inlet orifice (28) which communicates with said inlet opening (2) of the body (1).

5. A valve according to any one of Claims 1 to 3, characterised in that at its inner end (9c) the sleeve (9) comprises an inner cylindrical collar (31) which forms said seat (17) for the movable flap (16), and in that the fixed part (15) of the valve head (14) comprises a hollow cylindrical part (15a) which is secured detachably and concentrically in the sleeve (9).

6. A valve according to Claim 5, characterised in that said hollow cylindrical part (15a) is engaged to slide in the sleeve (9) and is retained axially between the inner collar (31) of the sleeve and an annular stop member (32) secured in a detachable manner in the sleeve (9).

7. A valve according to any one of Claims 4 to 6, characterised in that first and second seals (11 and 12) are arranged between the sleeve (9) and the hollow body (1), respectively at the inner and outer ends of the bore (5), in that at least a third seal (23) is arranged between the sleeve (9) and the hollow cylindrical part (15a) at the outer end thereof, in that said hollow cylindrical part (15a) at the outer end thereof, in that said hollow cylindrical part (15a) comprises a plurality of outlet orifices (26) spaced apart circumferentially on its periphery between its inner end and the third seal (23), and in that the sleeve (9) also comprises on its periphery, between the first and second seals (11 and 12), a plurality of circumferentially spaced outlet orifices (27) which overlap at least partly the outlet orifices (26) of said hollow cylindrical part (15a) and at least one of which communicates with the opening (3) of the hollow body (1).

8. A valve according to any one of Claims 1 to 3, characterised in that the fixed part (15) of the valve head (14) comprises a hollow cylindrical part (15a) externally threaded at its inner end, which is engaged to slide in the sleeve (9) and is partly engaged and screwed into an internally threaded blind cylindrical cavity (34) which is formed in said other lateral wall (1b) of the hollow body (1), in that first and second seals (11 and 12) are provided between the sleeve (9) and the hollow body (1), respectively at the outer and inner ends of the bore (5), and in that third and fourth seals (23 and 24) are provided between the sleeve (9) and the hollow cylindrical part (15a), respectively at the outer end and in an intermediate portion of said hollow cylindrical part.

9. A valve according to Claim 2, characterised in that the fixed part (15) of the valve head (14) comprises a hollow cylindrical part (15a) which is engaged to slide in the sleeve (9) and is partly engaged to slide and mounted to rotate in a blind cylindrical cavity (34) formed in said other lateral wall (1b) of the hollow body (1), and in that the sleeve (9) and said hollow cylindrical part (15a) are mechanically coupled so as to rotate together in such a way that rotation of the fixed part (15) of the valve head (14) causes an axial movement of the sleeve (9) by the screwing or unscrewing of the latter in the threaded bore (5) of the hollow body (1).

10. A valve according to any one of Claim 9, characterised in that the coupling between the sleeve (9) and said hollow cylindrical part (15a) is formed by ribs (47) which extend longitudinally on the periphery of the hollow cylindrical part (15a) and which are engaged in grooves (48) extending longitudinally in the inner cylindrical surface of the sleeve (9) over part of the length thereof.

11. A valve according to Claim 9 or 10, characterised in that an externally threaded annular plug (49) is screwed into the outer end of the threaded bore (5) of the hollow body (1), in that a first seal (11) is provided between the threaded annular plug (49) and the hollow body (1) at the outer end of the bore (5), a second seal (12) is provided between the sleeve (9) and the hollow body (1) at the inner end of the bore (5), a third seal (23) is provided between the threaded annular plug (49) and the fixed part (15) of the valve head (14), and a fourth seal (24) is provided between the sleeve (9) and the hollow cylindrical part (15a) in an intermediate portion thereof.

12. A valve according to Claim 8 or 11, characterised in that said hollow cylindrical part (15a) comprises a plurality of inlet orifices (36) circumferentially spaced apart on its periphery, close to its inner end, at least one of the inlet orifices (36) communicating with the inlet opening (2) of the hollow body (1), a plurality of outlet orifices (26) which are circumferentially spaced apart on its periphery between the third and fourth seals (23 and 24) and which are spaced axially from the inlet orifices (36), the fourth seal (24) being situated between the inlet orifices (36) and the outlet orifices (26), and an annular shoulder (37) which is formed in the inner surface of the hollow cylindrical part (15a) between the inlet orifices (36) and the outlet orifices (26) and which is provided with an annular seal (19) forming said seat (17) for the movable flap (16), and in that the sleeve (9) also includes in its periphery, between the first and second seals (11 and 12), a plurality of outlet orifices (27) spaced apart circumferentially, which overlap at least partly the outlet orifices (26) of said hollow cylindrical part (15a) and at least one of which communicates with the outlet opening (3) of the hollow body (1).

EP 0 237 407 B1

FIG.1

FIG.2

FIG.3

FIG.4

FIG.5

FIG.6

FIG.7

FIG.8